# EUROPEAN PATENT APPLICATION

(11) **EP 3 495 066 A1**
(43) Date of publication of application: **12.06.2019**
(21) Application number: 17836794.2
(22) Date of filing: 24.07.2017
(51) Int. Cl.: B21D 51/30

(54) **SEAMING DEVICE**

(30) Priority: 04.08.2016 JP 2016153426
(71) Applicant: Toyo Seikan Co., Ltd., Tokyo 141-8640 (JP)
(72) Inventor: OBATA Kazumoto, Yokohama-shi Kanagawa 230-0001 (JP); UEHARA Satoshi, Yokohama-shi Kanagawa 230-0001 (JP); MORI Kenji, Yokohama-shi Kanagawa 230-0001 (JP); TEZUKA Hidenori, Yokohama-shi Kanagawa 230-0001 (JP)
(74) Representative: dompatent von Kreisler Selting Werner - Partnerschaft von Patent- und Rechtsanwälten mbB
(86) International application number: PCT/JP2017/026691
(87) International publication number: WO 2018/025688

(57) **Abstract**

Provided is a seaming device capable of easily adjusting clearances between a chuck unit (seaming chuck device) and first and second seaming rolls in a short period of time, easily changing a seaming cycle, and producing a seamed sample can at a normal operation speed. In the seaming device, a seaming unit (130) carries out seaming operation by seaming rolls (131), a driving source for the swinging shaft (132) of the seaming rolls (131) is configured to be capable of controlling the seaming operation independently, and the driving output shaft (137) of a driving source (158) and the swinging shaft (132) of the seaming rolls are coupled through a ball spline (140).

## Description

### Technical Field

The present invention relates to a seaming device including a can placement unit for placing a can thereon, a chuck unit provided to oppose the can placement unit, and seaming rolls which seam a lid onto the can.

### Background Art

There is a known seaming device including a can placement unit for placing a can filled, for example, with a beverage thereon, a chuck unit provided to oppose the can placement unit, and seaming rolls which seam a lid onto the can.

As disclosed in Patent Literature 1, the known seaming device is, for example, provided with cam followers 20 and 21 which slide on fixed seaming cams 22 and 23 at ends of a follower cam lever 12 fixed to a revolving shaft 10, and first seaming rolls 5 for first seaming and second seaming rolls 6 for second seaming are supported at the revolving shaft 10.

The seaming cams 22 and 23 are formed of upper and lower complex conjugate plate cams in two stages, the follower cam lever 12 having the set of left and right cam followers 20 and 21 to be engaged with the cams respectively is fixed to the revolving shaft 10.

A displacement part b as a part of the seaming cam 22 in the first stage is slidable, a first sub cam 24 operating synchronously with the sliding part is provided on the opposite side to the seaming cam 22 for the cam follower 20, and a second fixed sub cam 27 is provided on the opposite side to the seaming cam 23 for the cam follower 21 in the other stage.

The set of left and right cam followers 20 and 21 at the follower cam lever 12 are configured to follow the seaming cams 22 and 23 unless the displacement part b slides and otherwise follow the side of the sub cams 24 and 27.

In this way, during first seaming checking in adjustment operation, the displacement part b may be slid to interrupt the operation of the second seaming rolls 6, and the first seamed state may be checked without carrying out the second seaming.

### Citation List

### Patent Literature

Patent Literature 1: Japanese Patent Application Publication No. H08-168837

### Summary of Invention

### Technical Problem

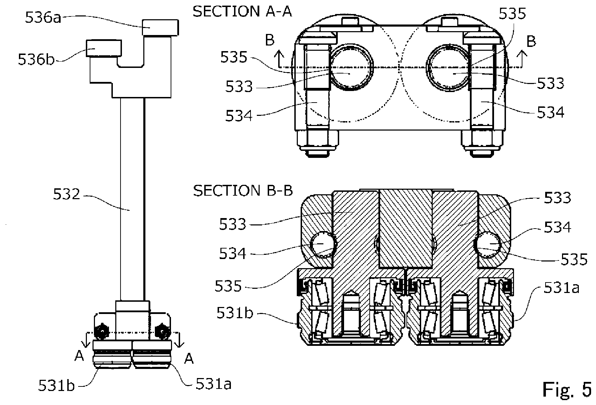

As shown in Fig. 5, in such a known seaming device, adjustment of clearances between a chuck unit (seaming chuck device) and first and second seaming rolls 531a and 531b is carried out by changing the angle of a roll shaft 533, and thus changing the roll positions of the first and second seaming rolls 531a and 531b using a worm gear mechanism 535 consisting of a part of an eccentric roll shaft 533 and a part of an adjustment screw 534, so that the operation for clearance adjustment between the chuck unit (seaming chuck device) and the seaming rolls 531a and 531b is complicated and takes much time.

A can is rotated by the rotation gear of a can placement unit (lifter) and the rotation gear of the chuck unit (the seaming chuck device), the first and second seaming rolls 531a and 531b swing to move toward the cans sequentially as the cam followers 536a and 536b follow plate cams (not shown) to rotate (swing) the swinging shaft 532 of the seaming rolls 531a and 531b, and therefore the number of turns (seaming cycle) of the can with respect to the seaming rolls 531a and 531b cannot easily be changed.

Furthermore, it is important to check the seamed state by the first seaming roll 531a in seaming adjustment (during producing a sample can), and the second seaming roll 531b is kept from moving toward the chuck unit (seaming chuck device) in a second seaming region while producing the sample can (seaming by the second seaming roll 531b is not carried out). Therefore, although not shown, a part of the plate cam for the cam follower 536a which swings the first seaming roll 531a is moved inwardly while the cam follower 536a is swung inwardly by an outer cam, and the cam follower 536b which swings the second seaming roll 531b through the swinging shaft 532 is allowed to move outwardly off from the plate cam. As a result, a gap is formed each between the cam followers 536a and 536b and the corresponding plate cams, so that the cam followers 536a and 536b cannot be held sufficiently, and seaming sample cans cannot be produced at a normal operation speed.

The present invention aims at solving the problem, and it is an object of the present invention to provide a seaming device capable of easily adjusting clearances between a chuck unit (seaming chuck device) and first and second seaming rolls in a short period of time, easily changing a seaming cycle, and producing a seamed sample can at a normal operation speed.

### Solution to Problem

In order to solve the problem, a seaming device according to the present invention includes a can placement unit for placing a can thereon, a chuck unit provided to oppose the can placement unit, and a seaming unit which seams a lid onto the can, the seaming unit carries out seaming operation by seaming rolls, a driving source for the swinging shaft of the seaming rolls can independently control the seaming operation, and the driving output shaft of the driving source and the swinging shaft of the seaming rolls are coupled through a ball spline.

### Advantageous Effects of Invention

In a seaming device according to claim 1, the seaming unit carries out seaming operation by seaming rolls, and a driving source for the swinging shaft of the seaming rolls can independently control the seaming operation, so that adjustment for seaming operation can be carried out in response to an electrical control command without mechanical adjustment, feedback control is enabled, and adjustment operation can be carried out easily in a short period of time.

As a result, clearances between the chuck unit (seaming chuck device) and the first and second seaming rolls can easily be adjusted in a short period of time, the seaming cycle can easily be changed, and a sample can may easily be produced by controlling the second seaming roll without moving the second seaming roll in producing the sample can used for checking the seamed state by the first seaming roll, which substantially determines the shape of the seamed part between the can and the lid.

Since the driving output shaft of the driving source for the swinging shaft of the seaming rolls and the swinging shaft of the seaming rolls are coupled through a ball spline, the driving source can be provided in a stable position independently and separately from the seaming unit, and rotation can surely be transmitted with high accuracy.

When the seaming rolls are actively moved in the vertical direction, the driving source does not have to follow the movement in the vertical direction, so that the driving source can be provided in a stable position independently and separately from the seaming unit, and rotation can surely be transmitted with high accuracy.

According to the configuration as in claim 2, the spline shaft of the ball spline has an intermediate part at least except for one end, the intermediate part being formed hollow, the weight can be reduced, and the outer diameter can be increased, so that greater torque can be transmitted.

According to the configuration as in claim 3, the can placement unit has a pressing mechanism which elastically and upwardly presses a plate on which a can is placed, and the chuck unit and the seaming unit are configured to be capable of moving vertically, so that the plate of the can placement unit does not have to be raised/lowered while the plate rotates. Therefore, the can does not move vertically and can have its position stabilized when the can is transported from a carry-in conveyer to the can placement unit, the can may be prevented from being dented by a guide or the pockets of a seaming turret, buckling attributable to such a dent during seaming can be prevented, and the seaming accuracy can be improved.

According to the configuration as in claim 4, the chuck unit and the seaming unit are integrally formed to move vertically by a single cam mechanism, which eliminates the necessity of providing a cam mechanism individually for each of the units, so that the structure can be simplified, change in the position between the chuck and the seaming rolls attributable to expansion by frictional heat, for example, with an oil seal can be prevented, and maintenance can be alleviated.

According to the configuration as in claim 5, the driving source for the swinging shaft of the seaming rolls is a servo motor, so that adjustment can be carried out in response to an electrical control command, and feedback control is enabled, so that adjustment operation can be carried out easily in a short period of time.

### Brief Description of Drawings

Fig. 1 is a sectional view for illustrating a can placement unit, a chuck unit, and a seaming unit in a seaming device according to one embodiment of the present invention.
Fig. 2 is a view for illustrating a pressing mechanism in the can placement unit in the seaming device according to the present invention.
Fig. 3 is a perspective view of the chuck unit and the seaming unit in the seaming device according to the embodiment of the present invention.
Fig. 4 is a partly sectional view of the chuck unit and the seaming unit in the seaming device according to the embodiment of the present invention.
Fig. 5 is a reference view for illustrating conventional clearance adjustment between a chuck unit (seaming chuck device) and seaming rolls.

### Reference Signs List

- 100: Seaming device
- 101: Seaming turret
- 110: Can placement unit
- 111: Pressing mechanism
- 112: Plate
- 113: Cylinder space
- 114: Piston
- 120: Chuck unit
- 121: Chuck
- 122: Vertical motion mechanism for chuck unit
- 123: Vertical motion cam for chuck unit
- 124: Vertical motion cam follower for chuck unit
- 129: Oil seal
- 130: Seaming unit
- 131, 531: Seaming roll
- 132, 532: Swinging shaft
- 533: Roll shaft
- 534: Adjustment screw
- 535: Worm gear mechanism
- 536: Cam follower
- 136: Chuck-roll integrated housing
- 137: Driving output shaft
- 138: Joint
- 140: Ball spline
- 140: a Spline shaft
- 140b: Spline nut
- 141: Hollow part
- 142: Fixing screw
- 151: Driving transmission mechanism for seaming turret
- 152: Driving transmission mechanism for plate
- 156: Interlocking shaft
- 158: Driving source (servo motor) for swinging shaft
- 159: Decelerator
- C: Can (before seamed)
- F: Lid

### Description of Embodiments

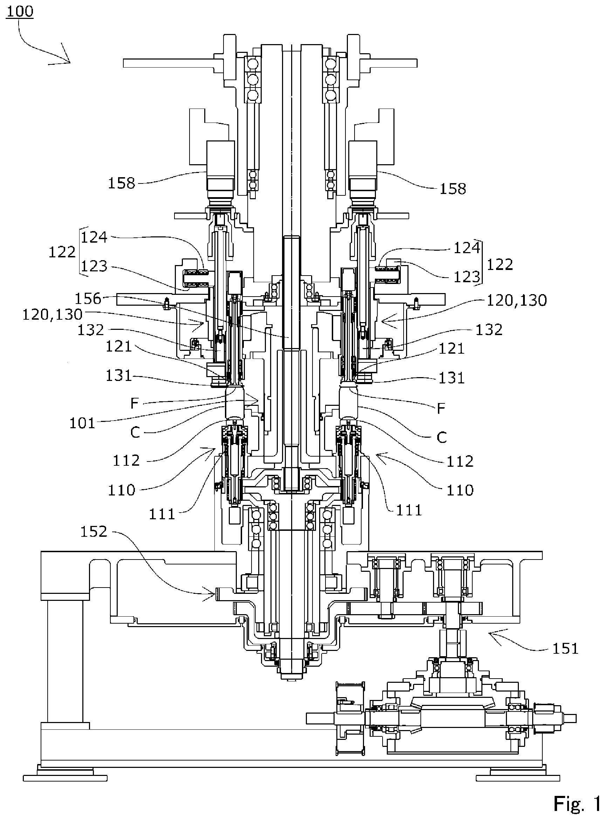

As shown in Fig. 1, a seaming device 100 according to one embodiment of the present invention includes a can placement unit 110 for placing a can C thereon, a chuck unit 120 provided to oppose the can placement unit 110, and a seaming unit 130 having seaming rolls 131 which seam a lid F onto the can C.

Note that according to the embodiment, the can C on the plate 112 of the can placement unit 110 is not raised/lowered with respect to the chuck unit 120 and the seaming unit 130, and the chuck unit 120 and the seaming unit 130 are moved vertically.

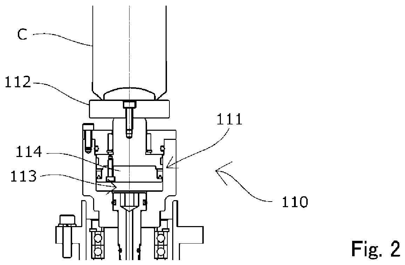

As shown in Fig. 2, the can placement unit 110 includes the plate 112 on which the can C is placed and a pressing mechanism 111 which presses the plate 112 elastically and upwardly by a pressure fluid such as compressed air.

A piston 114 having the plate 112 fixed thereto is inserted above a cylinder space 113 in the pressing mechanism 111, and the plate 112 is elastically and upwardly pressed as the pressure fluid such as compressed air is supplied into the cylinder space 113.

When the pressing mechanism 111 is used, constant pressing force can be obtained for all pockets, the constant pressing force is obtained regardless of the amount of how much the plate 112 is lowered by the pressing, which makes the adjustment extremely easy, and fluctuations during operation can be prevented.

Using the pressing mechanism 111, when the height of the can C slightly decreases during seaming, the error between the cam profile of the vertical motion cam 123 of the chuck unit 120 which will be described and the actual reduction in the height of the can is absorbed by the pressing mechanism 111, and the axial load does not change, so that the seaming accuracy can be improved, and the processing speed can be increased.

Note that an elastic member such as a spring may be used for the pressing mechanism 111 instead of the compressed air, while the pressing mechanism using a pressure fluid such as compressed air is preferable for the reason described above.

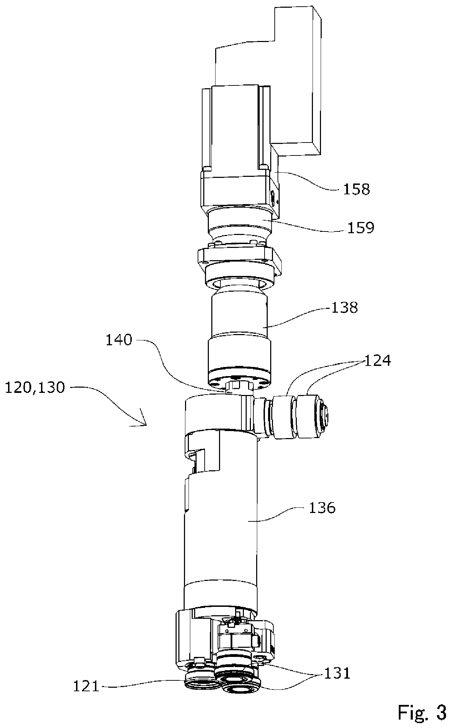

As shown in Figs. 1 and 3, the chuck unit 120 is moved vertically by the vertical motion mechanism 122 of the chuck unit 120 which includes the vertical motion cam 123 and a vertical motion cam follower 124.

The vertical motion cam 123 of the chuck unit 120 is provided in a fixed manner, and as a seaming turret 101 rotates, the vertical motion cam follower 124 of the chuck unit 120 moves along the cam profile, so that the chuck 121 of the chuck unit 120 moves vertically according to the position.

The chuck 121 provided rotatably in the chuck unit 120 is driven to rotate in synchronization with the plate 112 through an interlocking shaft 156.

Note that any appropriate means may be used or added for controlling the rotation of the chuck 121.

Meanwhile, the seaming unit 130 has a swinging shaft 132 for the seaming rolls 131, and the seaming rolls 131 carry out seaming operation and pressing operation by a driving source 158 for the swinging shaft 132.

The seaming unit 130 is formed integrally with the chuck unit 120 by a chuck-roll integral housing 136 except for the driving source 158 for the swinging shaft 132 and moves vertically together with the chuck unit 120.

The driving source 158 for the swinging shaft 132 is provided above the swinging shaft 132 in a position free from vertical motion.

In this way, the chuck unit 120 and the seaming unit 130 can move vertically together, which eliminates the necessity of raising/lowering the plate 112 of the can placement unit 110 while the plate rotates, so that the can C does not move vertically and can have a stable position when the can is transported from a carry-in conveyer to the can placement unit 110, the can may be prevented from being dented by the guide or the pockets of the seaming turret, buckling attributable to such dent during seaming can be prevented, and the seaming accuracy can be improved.

As the chuck unit 120 and the seaming unit 130 are integrally formed, accuracy in the vertical positional relation between the chuck unit 120 and the seaming unit 130 can be improved, and vertical positional deviation between the chuck unit 120 and the seaming unit 130 caused, for example, misalignment of the chuck unit 120 and the seaming unit 130 in the vertical direction by thermal deformation can be prevented, so that the seaming accuracy can be improved, and the processing speed can be improved.

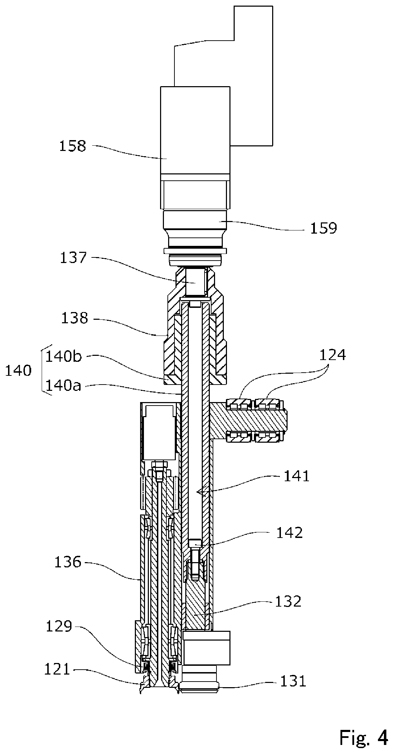

As shown in Fig. 4, the driving output shaft 137 of the driving source 158 is coupled with a spline nut 140b which carries the ball (not shown) of a ball spline 140 through a joint 138, and the swinging shaft 132 is connected to the lower end of the spline shaft 140a so that the swinging shaft can be moved vertically and transmit rotation.

The spline shaft 140a of the ball spline 140 is formed hollow except for the lower end and has its lower end fixed to the swinging shaft 132 by a fixing screw 142.

In this way, the spline shaft 140a of the ball spline 140 can have a reduced weight and an increased outer diameter and can transfer greater torque, and since the fixing screw 142 can be accessed from above through the hollow part 141 during assembling or maintenance, the weight of the entire component which moves vertically can have a reduced weight by allowing the swinging shaft 132 to have the smallest possible length and elongating the lightweight spline shaft 140a.

Note that the transmission means which allows the seaming rolls 131 to move vertically and carry out seaming operation and pressing is not limited to the above configuration, and any appropriate means can be used or added.

As shown in Fig. 1, the plate 112 of the can placement unit 110 and the chuck 121 of the chuck unit 120 are configured to rotate synchronously by the interlocking shaft 156 and driven by a driving motor (not shown) through a driving transmission mechanism 152.

The driving allows the start or acceleration timing for the rotation of the plate 112 and the chuck 121 to be controlled independently from the seaming turret and individually optimally adjusted without interrupting operation using, for example, a control panel, so that the adjustment operation can easily be carried out in a short period of time, while fluctuations during operation can be addressed.

When the rotating chuck 121 is fitted to a lid placed on the can, the rotation of the plate 112 and the chuck 121 is controlled, so that the rotation of the plate 112 and the chuck 121 is interrupted or slowed down, the deviation of the rotation center is reduced, dents, damages, etc. on the can caused by contact with a guide member, etc. are prevented, and the lid centering performance by the chuck 121 can be improved.

Since the driving source 158 for the swinging shaft 132 of the seaming rolls 131 is an independently controlled servo motor which includes a decelerator 159, the seaming operation timing (for changing a seaming section layout) or the pressing amount by the seaming rolls 131 can be independently controlled and individually optimally adjusted without interrupting operation using, for example, a control panel, so that the adjustment operation can easily be carried out in a short period of time while fluctuations during operation can be addressed.

As described above, since the driving source for the swinging shaft 132 of the seaming rolls 131 is a servo motor, adjustment can be carried out in response to an electrical control command, and feedback control is enabled, so that the adjustment operation can be carried out more easily in a shorter period of time.

Therefore, clearances between the chuck unit (seaming chuck device) and the first and second seaming rolls can easily be adjusted in a short period of time, the seaming cycle can easily be changed, and a sample can may easily be produced by controlling the second seaming roll without moving the second seaming roll in producing the sample can used for checking the seamed state by the first seaming roll, which substantially determines the shape of the seamed part between the can and the lid.

The can C having a lid F placed thereon is handed over from the carry-in conveyer to the seaming turret (not shown), and then placed on the plate 112 of the can placement unit 110 having its rotation controlled.

Then, the chuck unit 120 is lowered by the vertical motion mechanism 122, and the chuck 121 of the chuck unit 120 is fitted to the lid F.

The can C having the lid F fitted thereon is held between the plate 112 and the chuck 121 with a constant axial load necessary for seaming against the pressing force of the pressing mechanism 111 of the can placement unit 110, while the lid F is centered by the chuck 121, and the fitted can C is centered at the same time.

Then the seaming turret further rotates, and the can C is accelerated to a number of rotations necessary for seaming.

The seaming unit 130 moves vertically together with the chuck unit 120, the seaming rolls 131 are positioned at the seaming part of the can C having the lid F fitted thereon, and as the swinging shaft 132 of the seaming rolls 131 is rotated (swung) by the driving source (servo motor) 158, the seaming rolls 131 are pressed from the lateral side and seaming is carried out.

As shown in Fig. 3, there are two seaming rolls 131 provided for the swinging shaft 132, i.e., the roll for first seaming (the first seaming roll) and the roll for second seaming (the second seaming roll), and seaming is complete by sequentially pressing the seaming section as the seaming rolls pass the section.

Note that according to the embodiment, the chuck unit 120 and the seaming unit 130 are configured to move vertically, while the embodiment may be applied to the case in which the can placement unit 110 may move vertically to raise/lower the can C on the plate 112 with respect to the chuck unit 120 and the seaming unit 130.

## Claims

1. A seaming device, comprising a can placement unit for placing a can thereon, a chuck unit provided to oppose the can placement unit, and a seaming unit which seams a lid onto the can, wherein
the seaming unit carries out seaming operation by seaming rolls,
a driving source for a swinging shaft of the seaming rolls is capable of independently controlling the seaming operation, and
a driving output shaft of the driving source and the swinging shaft of the seaming rolls are coupled through a ball spline.

2. The seaming device according to claim 1, wherein a spline shaft of the ball spline has an intermediate part at least except for one end, the intermediate part being formed hollow.

3. The seaming device according to claim 1 or 2, wherein the can placement unit has a pressing mechanism which elastically and upwardly presses a plate on which a can is placed, and
the chuck unit and the seaming unit are configured to be capable of moving vertically.

4. The seaming device according to claim 3, wherein the chuck unit and the seaming unit are integrally formed to move vertically by a single cam mechanism.

5. The seaming device according to any one of claims 1 to 4, wherein the driving source for the swinging shaft of the seaming rolls is a servo motor.
